# EUROPEAN PATENT APPLICATION

(11) **EP 3 824 995 A1**
(43) Date of publication of application: **26.05.2021**
(21) Application number: 19209917.4
(22) Date of filing: 19.11.2019
(51) Int. Cl.: B01F 7/00, F16J 15/3244, F04D 29/10, B01F 15/00

(54) **SUBMERSIBLE MACHINE WITH IMPROVED CLOGGING PROTECTION**

(71) Applicant: Xylem Europe GmbH, 8200 Schaffhausen (CH)
(72) Inventor: NECHAEVA, Tatjana, 175 51 JÄRFÄLLA (SE); BREDWAD, Viktor, 163 43 SPÅNGA (SE)
(74) Representative: Brann AB

(57) **Abstract**

The invention relates to a submersible machine for generating a flow of liquid, comprising a stationary housing (2), an axially extending drive shaft and a propeller connected to said drive shaft, said propeller comprising a hub (13) and at least two blades connected to said hub (13), said hub (13) comprising a collar (22) arranged adjacent said stationary housing (2), said submersible machine comprising a circumferential lip (21) extending in the axial direction from the stationary housing (2) and at least partially overlapping said collar (22) in an cylindrical overlap region, wherein said collar (22) has at least two grooves (25) extending in the circumferential direction of the collar (22) and each having a first position (26) and a second position (27), said at least two grooves (25) each having less than 360 degrees extension in the circumferential direction and said first positions (26) of said grooves (25) are located in said overlap region (23) and said second positions (27) of said grooves (25) are located outside said overlap region (23).

## Description

### Technical field of the Invention

The present invention relates generally to the field of submersible machines suitable for generating a flow of liquid and suitable for mixing liquid comprising solid matter, such as sewage, wastewater, biomass slurry, etc. The present matter relates specifically to such a submersible machine configured for use in a wastewater treatment plant or digester. These submersible machines belong to the field of submersible mixers, i.e. mixers having rotating propellers, wherein the mixer is arranged to be partly or wholly lowered into the liquid/slurry.

The present invention relates specifically to a submersible machine comprising a stationary housing, an axially extending drive shaft protruding from and rotatably mounted in said stationary housing, and a propeller connected to said drive shaft. The propeller comprises a hub and at least two blades connected to said hub, wherein said hub comprises a collar arranged adjacent said stationary housing. The submersible machine further comprises a circumferential lip extending in the axial direction from the stationary housing and at least partially overlapping said collar in a cylindrical overlap region.

### Background of the Invention

A conventional mixer comprises a rotatable propeller mounted onto a mixer drive shaft, wherein said propeller must be interconnected to the drive shaft in a suitable way that provides a rigid and non-rotational mutual connection. Flow generating machines/mixers machines are for instance used in wastewater basins in order to mix the liquid/wastewater in order to obtain an as homogenous liquid mixture as possible, in order to keep the biological material suspended in the liquid, as well as in order to generate a liquid flow that circulates/flows along the circulation channel as an endless stream. In such installations the sludge may comprise a high content of fibers. Mixers having the drive shaft accessible/visible between the rotating propeller and the stationary motor housing, tends to have long fibers winding around the drive shaft.

In order to avoid such drawbacks it is known to seal of this volume surrounding the drive shaft by means of a circumferential collar/skirt that is part of the propeller and extending in the axial direction towards the stationary housing of the mixer, which axially extending collar/skirt is arranged in an overlapping configuration with a circumferential lip extending in the axial direction from the stationary housing. See for instance documents US6123448 and DE202013007839. This arrangement results in an axially extending gap located between the rotating collar of the propeller and the axially extending lip of the stationary housing. However, a drawback of this design/configuration is that fibers tends to clog this axially extending gap and short fibers tends to pass the axially extending gap and clog the volume surrounding the drive shaft and delimited by the propeller and the stationary housing. If the gap and/or volume is clogged a braking force acts on the propeller and the power usage of the mixer increase and the sealing between the drive shaft and the stationary housing may be damaged leading to liquid entering the motor compartment.

US 4801244 provides a device which protects an axial sealing between a drive shaft and a stationary housing from pollutants that may damage said axial sealing and cause a leakage and damage of a driving unit of said mixer. The protection of said axial seal from pollutants comprises counter-directed threaded profiles of helically formed grooves and cutting means. The helically formed grooves are so directed that pollutant material is fed away from the axial seal area and the cutting means is arranged to cut elongated fibers or materials into shorter/smaller pieces of material.

A disadvantage of known solutions is that the protection of said axial seal from polluted liquid is not sufficiently efficient. This will lead to pollutants reaching said axial sealing and thereby, over time, cause a leakage and a damage of the driving unit of said mixer.

### Summary of the Invention

The object of the present invention aims to reduce or eliminate the aforementioned disadvantages and failings of previously known mixers and thereby increasing the lifetime of such submersible machine/mixer.

According to the invention said object is attained by means of the initially defined submersible machine/mixer having the features defined in the independent claim. Preferred embodiments of the present invention are further defined in the dependent claims.

According to the present invention, there is provided a submersible machine/mixer of the initially defined type, which is characterized in that the collar of the propeller hub has at least two grooves extending in the circumferential direction of the collar and each having a first position and a second position , said at least two grooves each having less than 360 degrees extension in the circumferential direction and said first positions of said grooves are located in said overlap region and said second positions of said grooves are located outside said overlap region.

The advantage of having a plurality of individually separated grooves each having a first/start position and a second/end position is the increased likelihood of removing pollutants from an area in between said lip and said collar. An increased number of grooves may increase the probability to prohibit pollutants from reaching the axial seal between the drive shaft and the stationary housing of the submersible machine. The inventive arrangement of grooves in said collar, the distance of travel of said pollutants from said non-wanted area in between said lip and said collar to an area outside thereof may be greatly reduced as compared to prior art solutions. By reducing the length of said grooves, i.e., the groove having less rotational extension than a full lap/turn of said collar, one will reduce the internal friction of said pollutants and thereby the likelihood of clogging may be reduced compared to prior art solutions.

In various example embodiments of the present invention at least one groove is wider at its first/start position than at its second/end position.

The advantage of having a groove with an increased width at its first position in relation to its second position is that such design will increase the likelihood of removing pollutants from the axially extending gap between said lip and said collar at the same time as the likelihood of pollutants entering the axially extending gap will decrease.

In various example embodiments of the present invention at least one groove is deeper at its first position than at its second position.

The advantage of having a groove with an increased depth at its first position in relation to at its second position is that such design will increase the likelihood of removing pollutants from the axially extending gap between said lip and said collar at the same time as the likelihood of pollutants entering the axially extending gap will decrease.

In various example embodiments of the present invention the grooves having less than 180 degrees extension in a circumferential direction. In various example embodiments said grooves having less than 80 degrees extension in the circumferential direction.

The advantage of using grooves having less extension in the circumferential direction is that the total length of said groove is reduced. A reduced length will remove pollutants in said groove quicker and more efficient from its first/inner position towards its second/outer position.

In various example embodiments of the present invention said collar is provided with a circumferential end region located in said overlap region, essentially in parallel with an inner surface of said lip, between said at least two grooves and the stationary housing. In various example embodiments said end region of the collar has an extension in the axial direction that is equal to or more than 1,5 mm, preferably equal to or more than 2 mm.

The advantage of such end region of the collar located between the first/inner position of said grooves and the stationary housing is that such end region will act as a stop/sealing for pollutants from entering further into the volume delimited by the stationary housing and the propeller.

In various example embodiments of the present invention said at least two grooves may be partially overlapping each other or non-overlapping each other in the axial direction of said collar.

The advantage of a plurality of independent grooves according to the inventive concept is that they may be arranged relatively freely on said collar with increased efficiency over the prior art solutions.

In various example embodiments of the present invention said lip is made of rubber.

The advantage of these embodiments is that such a lip is relatively inexpensive and easy to mount and connect to said stationary housing of the submersible machine.

In various example embodiments of the present invention the radial distance between said collar and the inner surface of said lip in the overlap region is equal to or more than 0,1 mm and equal to or less than 0,5 mm. The advantage of having a relatively small radial distance between the lip and the collar is that such a distance will prohibit larger pollutants from entering the area in between said lip and said collar. A predetermined minimum distance should be provided between said collar and said lip for cooling and for making transport of fluid from inside the overlapping area to outside of said overlapping area.

In various example embodiments the projected extension in the axial direction between the first position of each groove and the second position of said groove is equal to or more than 5 mm.

The advantage of having a predetermined minimum axial extension of said grooves on said collar is that such grooves will provide for a barrier of pollutants into an area where the axial sealing is provided. Decreasing such axial extension of said grooves below said minimum distance may increase the likelihood of pollutants entering the sealing area between the drive shaft and the stationary housing.

In various example embodiments said lip may be provided with at least one groove at the inner surface thereof at the overlap region, said groove extending in the circumferential direction and having a first position and a second position, said groove having less than 360 degrees extension in the circumferential direction, said second position being located at the outer rim of the lip and said first position being located distanced from the axial ends of said overlap region.

The advantage of having grooves at the inner surface of said lip may further improve the efficiency of prohibiting pollutants from entering the volume delimited by the propeller and the stationary housing.

Further advantages with and features of the invention will be apparent from the other dependent claims as well as from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic perspective view of an inventive submersible machine/mixer according to a first embodiment,
- Fig. 2: is a schematic partly cut-away side view of the mixer disclosed in figure 1,
- Fig. 3: is a schematic end view of the mixer disclosed in figure 1,
- Fig. 4: is a schematic side view of a part of an inventive submersible machine/mixer according to a second embodiment,
- Fig. 5: is a schematic partly cut-away side view of a propeller and a lip of a submersible machine/mixer, parts are left out,
- Fig. 6: is a schematic cross section of an alternative embodiment of the lip, and
- Fig. 7a-c: are enlarged illustrations of the interface between the lip and the collar at different angular positions.

### Detailed description of preferred embodiments of the invention

The present invention relates to a submersible machine/mixer suitable for generating a flow of liquid, especially wastewater, sewage, biomass slurry, etc. Even though said mixer has a broad applicability, i.e. to generate a flow of liquid, the inventive mixer is especially configured for use in a race track of a wastewater treatment plant or in a digester tank of a biogas plant, i.e. for treatment/transportation of liquid comprising solid/biological matter. Most parts and details of the submersible machine/mixer are removed for the sake of simplicity of reading the figures.

A mixer, more precisely a submersible mixer or a wastewater mixer, is designed and configured to be able to operate in a submerged configuration/position, i.e. during operation be located entirely under the liquid surface of a tank. Thus, an operative position of the submersible mixer is located inside a tank, and the operative position of the submersible mixer is in the preferred embodiment located at the lower region of such a tank. It shall be realized that the submersible mixer during operation must not be entirely located under the liquid surface but may continuously or occasionally be partly located above the liquid surface in the tank. Mixers as referred to herein, comprises an electrical motor arranged in a liquid tight housing, preferably made of metal, and a drive shaft extending from the electrical motor. A propeller is connected to the drive shaft and is driven in rotation by said drive shaft and electrical motor during operation of the submersible mixer. The electrical motor is powered via an electrical cable extending from the top of the tank. The submersible mixer comprises a liquid tight lead-through receiving the electrical cable. The submersible mixer may also comprise a control unit, such as an intelligent drive or VFD, located inside the liquid tight housing. The components of the mixer are usually cold down by means of the liquid surrounding the mixer. It shall also be pointed out that the mixer may be configured to be lowered into and hoisted from the tank by means of a guide rail assembly.

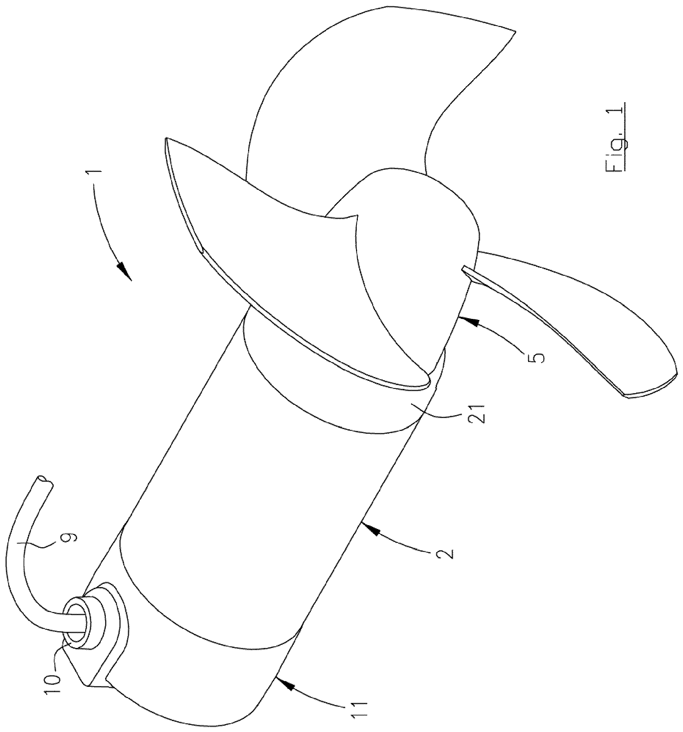

Reference is initially made to figures 1-3. Figure 1 disclose schematically a submersible machine in the form of a mixer, generally designated 1, comprising a liquid tight stationary housing/body 2, a drive unit having an electric motor 3 and a drive shaft 4 extending from the electric motor 3 to a propeller, generally designated 5, detachably connected to a forward end of the drive shaft 4. The electric motor 3 comprises in a conventional way a stator 6 and a rotor 7. The drive shaft 4 may comprise a mechanical transmission unit 8, having a fixed gear ratio wherein the propeller 5 has a lower rotational speed than the rotor 7 of the electric motor 3, i.e. reduced gearing. The drive unit also comprises necessary bearings and seals, not disclosed. Thus, the propeller 5 is driven in rotation by the electric motor 3 via the drive shaft 4. During operation of the mixer 1 the propeller 5 has an operational speed preferably in the range 10-500 rpm. The propeller 5 and the drive shaft 4 have a common center axis, generally designated A. The electric motor is powered via an electric power cable 9 extending from a power supply, and the mixer 1 comprises a liquid tight lead-through 10 receiving the electric power cable 9.

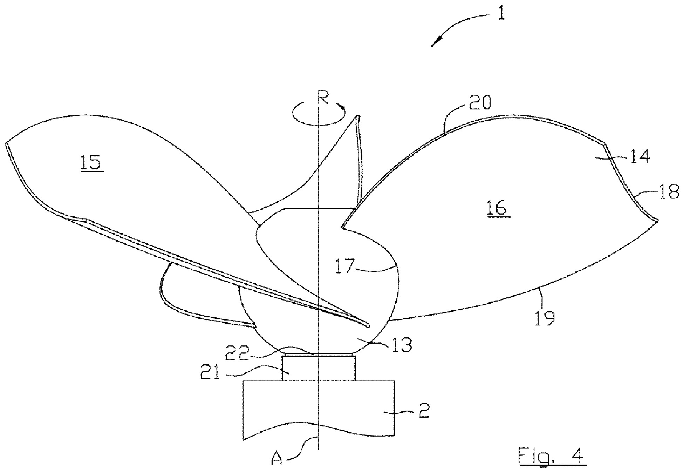

The submersible machine/mixer 1 preferably comprises a control unit 11 that is operatively connected to the electric motor 3, the control unit 11 being configured for monitoring and controlling the operation of the mixer machine. The electric motor 3 is configured to be driven in operation by the control unit 11. Thus, the control unit 11 is configured to control the rotational speed at which said electric motor 3 of the mixer 1 is to be driven, for instance by controlling the frequency of the current operating the electric motor 3. According to the disclosed embodiment, the control unit 11 comprises a Variable Frequency Drive (VFD) 12. During normal operation of the mixer 1, the propeller 5 has rotational direction generally designated R. The propeller 5 comprises a hub 13 and at least two blades 14 connected to said hub 13 and extending outwards in a radial direction from said hub 13. According to the disclosed embodiment of figures 1-3 the hub 13 has a slightly tapered primary shape, at least in the region where the blades/vanes 14 are attached to the hub 13. According to the embodiment disclosed in figure 4 the hub 13 has a spherical primary shape, at least in the region where the blades 14are attached to the hub 13. The blades 14 are pre-shaped and then attached/welded to the hub 13. The propeller 5 may be made of metal, preferably stainless steel, and each blade 14 may be made of metal sheet, i.e. having uniform thickness over the entire extension of the blade 14. In the disclosed embodiments the propeller 5 comprises three blades 14. The hub 13 is preferably hollow, i.e. having an outer shell and an inner structure configured to cooperate with the drive shaft 4.

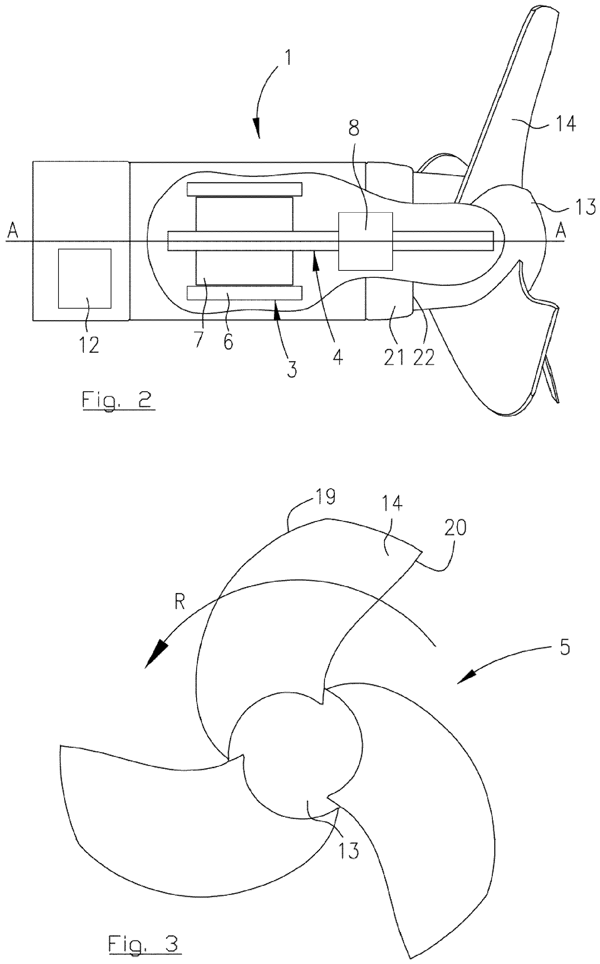

In all embodiments, each blade 14 comprises a thrust side surface 15 and a suction side surface 16. Thereto the blade 14 comprises an inner edge 17 fixedly connected to the hub 13 and an outer edge 18 located at a distance from the hub 13, i.e. at least a part of the outer edge 18 is located at an outer diameter/periphery of the propeller 5, a leading edge 19 extending from the inner edge 17 (hub 13) to the outer edge 18, and a trailing edge 20 extending from the inner edge 17 (hub 13) to the outer edge 18. Thus, during operation the propeller 5 will rotate in the counterclockwise direction as depicted by arrow R and the liquid slurry will flow from left to right in figure 2. It shall be pointed out that the disclosed shapes of the blades 14 is just an example embodiment and is not as such important for the invention. Any shape of the blades may be used in combination with the inventive concept as disclosed hereinbelow.

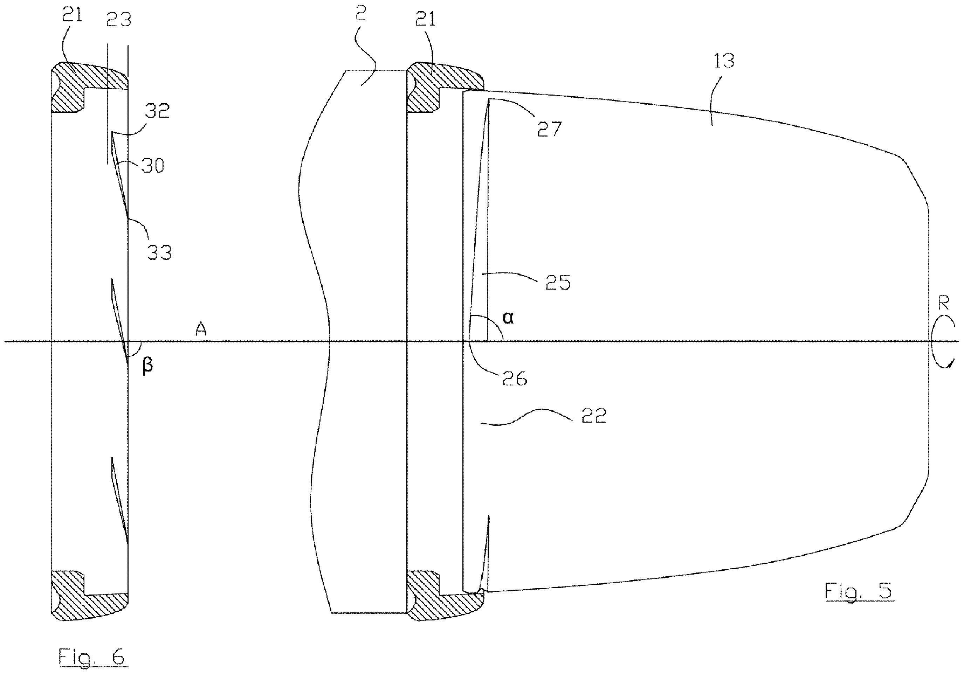

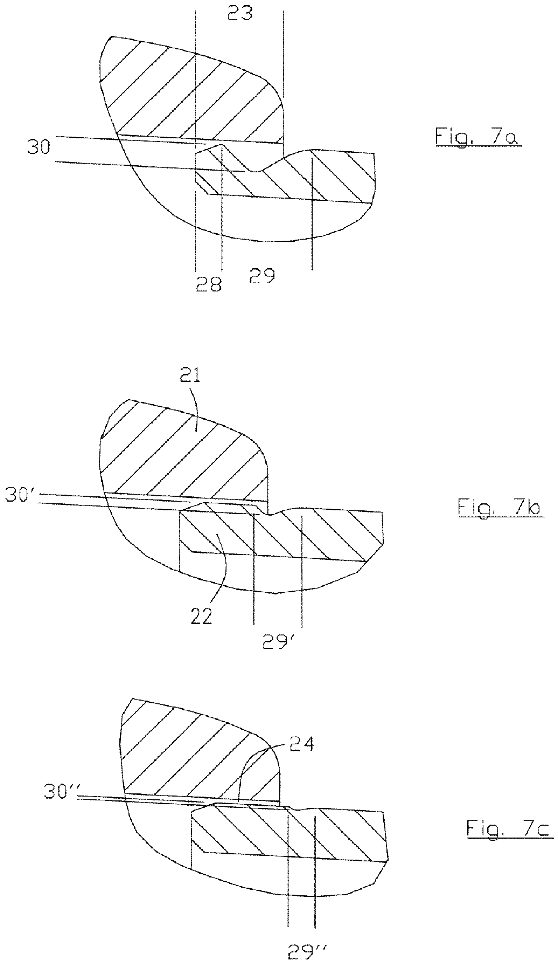

Reference is also made to figures 5 and 7a-7c. The submersible machine further comprises a lip 21 extending in the axial direction from the stationary housing 2, and the propeller hub 13 comprises a collar 22 located adjacent the stationary housing 2, wherein the lip 21 is partly overlapping the collar 22 providing an overlap region 23 between said lip 21 and said collar 22. The overlap region 23 is an axially extending gap. The collar 22 is arranged as an extension of said hub 13 of said propeller 5, and is part of said hub 13. The collar 22 has circular cross sections and has a generally cylindrically shape or slightly conical shape tapering towards the stationary housing 2 or towards the forward end of the propeller 5. The circular cross sections of the collar 21 are essentially coaxial with the center axis A. The collar 22 extends in a direction towards said stationary housing 2. The lip 21 is provided on said housing 2 and is extending in a direction towards said propeller 5. The lip 21 also has circular cross sections and has a generally cylindrical shape or slightly conical shape tapering in the same direction as the collar 22. The circular cross sections of the lip 21 are essentially coaxial with the center axis A. The inner surface of said lip 21 is preferably in parallel with the outer surface of the collar 22. Said lip 21 is arranged so as to at least partially overlap said collar 22 when said propeller 5 is assembled onto the drive shaft 4. The minimum radial distance 24 between said lip 21 and said collar 22 is equal to or greater than 0,1 mm and equal to or less than 1 mm. In various alternative embodiments said radial distance between the lip 21 and the collar 22 is equal to or greater than 0,3 mm and equal to or less than 0,8 mm. In further various alternative embodiments radial distance between the lip 21 and the collar 22 is equal to or greater than 0,4 mm and equal to or less than 0,6 mm. The overlap region 23 may have an axial extension equal to or more than 5 mm and equal to or less than 50 mm.

Figure 5 disclose in a schematic side view the hub 13 of the propeller 5 (the blades 14 are removed), a lip 21 and the stationary housing 2. The collar 22 is in figure 5 provided with a set of grooves 25 comprising at least two grooves. Each groove 25 having a first position 26 and second position 27. The first/leading position and the second/trailing position of a groove 25 are defined with respect to the intended direction of rotation R of said propeller 5 during normal operation. The intended rotational direction R of the propeller 5 in figure 5 is downwards. With such a direction of rotation R of said propeller 5 the first position 26 of a groove 25 will arrive at a fixed reference position on said lip 21 earlier than said second position 27.

An imaginary straight line (i.e. following the circular shape of the collar 22 but having a constant pitch angle) extending between the first position 26 and the second position 27 of the groove 25 is arranged at an obtuse angle α with the center axis A, i.e. the pitch angle is equal to 90 minus α degrees. The angle α may be equal to or greater than 45 degrees and less than 90 degrees. The angle α needs to be less than 90 degrees in order to transport pollutant material in the direction from the stationary housing 2 towards the free end of the propeller 5. The angle α needs to be larger than 45 degrees in order to allow a flow of solid matter in said groove 25. In various alternative embodiments the angle α is equal to or greater than 60 degrees, preferably equal to or greater than 75 degrees. In various alternative embodiments the angle α is equal to or less than 85 degrees.

The collar 22 has a circumferential end region 28 located in said overlap region 23 between the grooves 25 and the stationary housing 2. Thus, the end region 28 is located closer to the stationary housing 2 than the first positions 26 of the grooves 25. The end region 28 may have a width in the axial direction that is equal to or more than 0,5 mm and equal to or less than 10 mm. Said end region 28 form an additional barrier preventing solid matter from entering into the volume delimited by the propeller 5 and the housing 2. In various embodiments the width of the end region 28 is equal to or more than 1,5 mm, preferably equal to or more than 2 mm. The terminal part of the end region 28 may have the shape of a truncated cone in order to simplify assembly, i.e. inserting the collar 22 into the lip 21.

The depth of the grooves 25 may vary over the length thereof from the first position 26 to the second position 27. The groove 25 is preferably deeper at the first position 26 compared to the second position 27. The maximum depth at the area of the first position 26 may be equal to or more than 1 mm and equal to or less than 5 mm and the depth at said second position 27 may be equal to or more than 0 mm and equal to or less than 2 mm. Preferably, the depth of the groove 25 is decreasing all the way from the first position 26 to the second position 27, for instance uniformly decreasing.

The width of the groove 25 may vary over the length thereof from the first position 26 to the second position 27. The maximum width of the groove 25 at the area of the first position 26 is preferably wider than the width at the second position 27. The maximum width at the area of the first position may be equal to or more than 1 mm and equal to or less than 10 mm and the width at the second position may be equal to or more than 0 mm and equal to or less than 5 mm. Preferably, the width of the groove 25 is decreasing all the way from the first position 26 to the second position 27, for instance uniformly decreasing.

The invention requires at least two grooves 25. In alternative embodiments three or more grooves may be present. Each groove 25 having less than 360 degrees extension in the circumferential direction, i.e., each and every single groove 25 will not go a full lap of said collar 22. Each groove may extend only over a relatively small angular segment. In various example embodiments said angular segment is equal to or less than 180 degrees. In various example embodiments said angular segment is equal to or less than 90 degrees. In various example embodiments said angular segment is equal to or less than 45 degrees. In various example embodiments of the present invention said at least two grooves 25 may be partially overlapping each other or non-overlapping each other in the axial direction of said collar 22.

It is essential for the present invention that the first positions 26 of said grooves 25 are located in said overlap region 23 and said second positions 27 of said grooves 25 are located outside said overlap region 23. Thereby the solid matter that may enter the axial gap, i.e. the overlap region 23, will during normal operation of the pump be transported out from the gap in the direction towards the free end of the propeller 5 due to the turbulence generated in the gap, and the solid matter approaching the gap from outside the pump will meet a turbulence generated by the part of the grooves 25 located outside the overlap region 23 and by transported away from entering the gap.

In various example embodiments all grooves 25 are identical. In various example embodiments at least one of the grooves 25 is different from the other grooves 25. The grooves 25 may be straight, bent/curved or meander shaped, preferably the grooves follow a helical shape. The length of said grooves 25 may be identical. In various example embodiments at least one groove has different length than the other grooves.

Figures 7a-7c illustrate enlarged cross- -sections of a part of the interface (overlapping region 23) between the lip 21 and the collar 22 at different angular position of said collar 22 with respect to said lip 21. Figure 7a illustrates the first position 26 or at least a position close to the first position of the groove 25 relative to said lip 21. It is apparent that in the preferred embodiment a part of the full width of said groove 25 at the first position 26 does not fall inside said overlap region 23. However, it is conceivable that in various alternative embodiment the entire width of the groove 25 at the first position 26 falls inside the overlap region 23. A rotation of said the propeller 5 and collar 22 with respect to said lip 21 a certain angle, for instance half the length of the groove 25,results in a cross section as disclosed in figure 7b. Halfway, at least part of the width of the groove 20 is located outside said overlap region 23. In figure 7a the width of the groove 25 is denoted 29 and the depth of said groove 25 is denoted by 30. In figure 7b the width 29' is narrower than the width 29 in figure 7a. The depth 30' in figure 7b is shallower than the depth 30 in figure 7a. A further rotation of said collar 22 with respect to said lip 21 to the second position 27 or at least close a position close to the second position 27 results in a cross section as depicted in figure 7c. In figure 7c the groove 25 is completely located outside the overlap region 23. In figure 7c the width 29" of the groove 25 is narrower than the width 29' of the groove 25 in figure 7b. The depth 30" of the groove 25 in figure 7c is shallower than the depth 30' of the groove 25 in figure 7b. A distance between the largest diameter in said collar 16 and the smallest diameter in said lip 15 is denoted by 50 in figure 3c.

Reference is now also made to figure 6. In various example embodiments said lip 21 may also be provided with grooves 31 on the inner surface facing towards the collar 22 of the hub 13. Said grooves 31 in said lip 21 may be constituted by one or several grooves. Figure 6 depicts a cross section of the overlapping region 23 of a schematic lip 21 showing the inner surface of half such a cylindrically shaped lip 21. Each groove 31, median line of said groove, may be arranged at an angle β with the center axis A. The angle β may be equal to or greater than 45 degrees and less than 90 degrees. The angle β needs to be less than 90 degrees in order to transport pollutant material in the direction from the stationary housing 2 towards the free end of the propeller 5. The angle β needs to be larger than 45 degrees in order to allow a flow of solid matter in said groove 25. In various alternative embodiments the angle β is equal to or greater than 60 degrees, preferably equal to or greater than 75 degrees. In various alternative embodiments the angle β is equal to or less than 85 degrees. Said groove 31 extending in the circumferential direction and having a first position 32 and a second position 33, said groove 31 having less than 360 degrees extension in the circumferential direction, said second position 33 being located at the outer rim of the lip 21 and said first position 32 being located distanced from the axial end of said overlapping region 23. The axial distance between the groove 31 and the axial end of the overlapping region 23 is equal to or more than 0,5 mm and equal to or less than 10 mm. The width of the groove 31 at the first position 32 is greater than the width at the second position 33. The depth of the groove 31 at the first position 32 is greater than the depth at the second position 33.

The lip 21 may be made of rubber material or similar flexible material. The lip 21 may be removably attached to said stationary housing 2. The collar 22 may be formed as a single unit together with said hub 13. In various example embodiments said collar 22 may be removably attached to said hub 13. The collar 22 may be made of metal, ceramic plastic or rubber/elastic material.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims. Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

## Claims

1. A submersible machine (1) for generating a flow of liquid, comprising a stationary housing (2), an axially extending drive shaft (4) protruding from and rotatably mounted in said stationary housing (2), and a propeller (5) connected to said drive shaft (4), said propeller (5) comprising a hub (13) and at least two blades (14) connected to said hub (13), said hub (13) comprising a collar (22) arranged adjacent said stationary housing (2), said submersible machine (1) comprising a circumferential lip (21) extending in the axial direction from the stationary housing (2) and at least partially overlapping said collar (22) in an cylindrical overlap region (23), **characterized in that** said collar (22) has at least two grooves (25) extending in the circumferential direction of the collar (22) and each having a first position (26) and a second position (27), said at least two grooves (25) each having less than 360 degrees extension in the circumferential direction and said first positions (26) of said grooves (25) are located in said overlap region (23) and said second positions (27) of said grooves (25) are located outside said overlap region (23).

2. The submersible machine according to claim 1, wherein at least one of said grooves (25) has a width at the first position (26) that is greater than a width at the second position (27).

3. The submersible machine according to claim 1 or 2, wherein at least one of said grooves (25) has a depth at the first position (26) that is greater than a depth at the second position (27).

4. The submersible machine according to any of the claims 1-3, wherein each of said at least two grooves (25) has less than 180 degrees extension in the circumferential direction.

5. The submersible machine according to any preceding claim, wherein each of said at least two grooves (25) has less than 90 degrees extension in the circumferential direction.

6. The submersible machine according to any preceding claim, wherein said collar (22) has a circumferential end region (28) located in said overlap region (23) between said at least two grooves (25) and the stationary housing (2).

7. The submersible machine according to claim 6, wherein said end region (28) of the collar (22) has an extension in the axial direction that is equal to or more than 1,5 mm, preferable equal to or more than 2 mm.

8. The submersible machine according to any preceding claim, wherein said at least two grooves (25) are not overlapping each other in the axial direction of said collar (22).

9. The submersible machine according to any of claims 1-7, wherein said at least two grooves (25) are partially overlapping each other in the axial direction of said collar (22).

10. The submersible machine according to any preceding claim, wherein said lip (21) is made of rubber.

11. The submersible machine according to any preceding claim, wherein the radial distance between said collar (22) and the inner surface of said lip (21) in the overlap region (23) is equal to or more than 0,1 mm and equal to or less than 0,5 mm.

12. The submersible machine according to any preceding claim, wherein the projected extension in the axial direction between the first position (26) of each groove (25) and the second position (27) of said groove (25) is equal to or more than 5 mm.

13. The submersible machine according to any preceding claim, wherein all grooves (25) are identical.

14. The submersible machine according to any preceding claim, wherein said lip (21) is provided with at least one groove (31) at the inner surface thereof at the overlap region (23), said groove (31) extending in the circumferential direction and having a first position (32) and a second position (33), said groove (31) having less than 360 degrees extension in the circumferential direction, said second position (33) being located at the outer rim of the lip (21) and said first position (32) being located distanced from the axial ends of said overlap region (23).
